# EUROPEAN PATENT APPLICATION

(11) **EP 0 733 494 A2**
(43) Date of publication of application: **25.09.1996**
(21) Application number: 96302017.7
(22) Date of filing: 22.03.1996
(51) Int. Cl.: B60B 27/00

(54) **Bearing assembly for axles of industrial vehicles**

(30) Priority: 22.03.1995 IT VR950025
(71) Applicant: BATTAGLINO S.P.A., 37135 Verona (IT)
(72) Inventor: Battaglino, Daniele, 37131 Verona (IT)
(74) Representative: Cline, Roger Ledlie

(57) **Abstract**

A wheel assembly for axles of industrial vehicles, which is intended for mounting on a stub axle spindle (2) having a threaded free end (4), comprising a hub (10) which can be coupled to a brake drum (12), an outer bearing (8) and an inner bearing (9) which are inserted into the central cavity of the hub in proximity to its longitudinal ends and are immobilized therein by respective stop members, a spacer ring (17) placed between the axle spindle (2) and the inner bearing (9), and an axle nut (15) screwed onto the free threaded end (4) of the spindle (2) in order to immobilize the outer bearing (8). The spacer ring (17) is separated from the hub (10) and is in contact with the inner race (9') of the inner bearing (9); the stop members consist of a first shaped ring (18) secured to the inner wall of the hub by one or more fastening dowels (25), and of a second shaped retaining ring (26) secured to the inner wall of the hub by a threaded coupling, in which both the said elements (18; 26) define a series of radial apertures (24; 30). These apertures allow inspection and lubrication of the respective bearings (9; 8) which are immobilized thereby.

## Description

The subject of the present invention is a wheel assembly for axles of industrial vehicles, according to the preamble of the independent claim.

A wheel assembly of this type comprises at least one pair of rolling bearings mounted on an axle spindle, a hub supported by the aforesaid bearings and to which is fixed a brake drum, a spacer ring interposed between the innermost bearing and a land of the spindle, and an axle nut screwed onto the threaded end of the spindle in order to immobilize the outermost bearing axially.

It is known that wheel assemblies have to be designed to allow them to be dismantled from the stub axle spindle so as to carry out normal maintenance of the brake and of the wheel. Such operations envisage the inspection and/or removal of the drum or of the linings as well as visual checking and greasing of the bearings.

Wheel constructors have attempted to solve the problem by means of unitary assemblies which avoid the dismantling and refitting of the bearings and the relevant seals of the hub.

US-A- 4,121,871 is described a wheel assembly consisting of a hub supported by end bearings with a nut screwed onto the axle spindle in order to immobilize the assembly axially. The two bearings are preinstalled and secured in the hub by elastic rings in such a way as to form a unitary assembly. The assembly is dismantled from the spindle in a conventional manner by unscrewing the nut and extracting the hub together with the premounted bearings. Extraction is carried out using universal tools or special tackle. In this assembly, the outermost bearing is protected from dust by a hubcap cover, while the innermost bearing has no protection. Both bearings are thus accessible for normal maintenance and greasing although the innermost is not adequately protected.

A wheel assembly is known from the DE-C- 207,648 which consists of a hub inside which two end bearings are axially immobilized by respective rigid threaded rings. In this case also, by unscrewing the axle nut, the assembly can be dismantled unitarily while keeping both bearings attached to the hub. The outermost bearing is protected by a hubcap cover while the innermost one is fully covered by the immobilizing ring held by an outer elastic ring. In order to carry out normal maintenance and greasing of this inner bearing it is necessary to remove the outer elastic ring and the rigid threaded ring, leaving the bearing free and hence not held in the hub.

The GB-A- 27,834 describes a wheel assembly in which two bearings are secured to a first bell hub by rigid annular elements. On the first hub is mounted a second hub or friction unit which supports the wheel, to which is fixed a ring with an inward projecting end flange. This document teaches that in order to translate the friction unit axially with respect to the spindle, the nut has a peripheral collar which is held axially by the flange of the ring, permitting rotation. On unscrewing the nut, its collar acts from behind on the flange of the ring and operates as an extractor with regard to the friction hub which drags the other members of the assembly along with it. After dismantling, the nut remains attached to the hub. In this case also, access from outside the bearings is precluded and the latter must be dismantled from the hub in order to carry out inspection and greasing.

A wheel assembly is known from the EP-A- 0 407 719 in which the bearings are immobilized on the hub by elastic rings in such a way as to define a unitary assembly while the nut acts on one side on the outer bearing and on the other on the hub. In this way the nut serves also to extract the assembly from the spindle at the time of unscrewing. In this assembly, however, the package-mounted bearings are completely covered and are inaccessible from end on. Therefore, in order to inspect and grease the bearings it is necessary to dismantle the elastic rings in order to remove on the one hand the nut and on the other the spacer ring and the grease seal. This involves considerable time loss and minor savings in maintenance. Furthermore, the oil seal ring for the innermost bearing is held between the thrust ring and the actual bearing, and hence cannot be inspected or replaced without removing the elastic ring and the thrust ring.

The main purpose of the present invention is to improve the devices of the known art by providing a unitary wheel assembly which, in addition to unitary dismantling from the axle spindle, also permits full accessibility from outside the relevant bearings, without having to remove them from the hub, and complete protection of said bearings. This is achieved by the arrangements set out in the characterising clause of claim 1.

By virtue of this layout, it is possible to inspect and lubricate the end bearings without having to dismantle them from the hub, in such a way as to guarantee longer life and greater reliability of the bearings and hence of the entire assembly.

Furthermore, the spacer ring does not remain attached to the assembly when dismantling the latter from the spindle, thereby reducing the number of components and the weight of the actual assembly.

Preferably, the first rigid shaped ring comprises a tubular portion with an external thread screwed into an internal thread of the hub, and a radial portion which extends partly outwards and has through holes for bolts screwed to the hub at its front edge.

The radial portion furthermore preferably extends partly inwards in order to define an annular edge able to interfere axially with an annular sleeve of the axle nut and is provided with a first series of radial recesses defining through apertures for inspecting the outermost bearing.

Advantageously, the innermost bearing can be immobilized axially by a second rigid shaped ring anchored to the hub by at least one fastening dowel.

This second rigid shaped ring preferably comprises an outer cylindrical portion from which there extends an inner annular flange intended to interact with the fixed race of the innermost bearing.

The outer cylindrical portion preferably has seats for housing the inner end of the said at least one fastening dowel, while the radial portion has a second series of radial recesses defining the through apertures for inspecting and greasing the innermost bearing.

Examples of the invention will now be described with reference to the accompanying drawings in which:
Fig. 1 represents a longitudinal sectional view of a first embodiment of a wheel assembly according to the invention;
Fig. 2 represents a sectional view of a first feature of Fig. 1;
Fig. 3 represents a front view of a second feature of Fig. 1;
Fig. 4 represents a sectional view of a third feature of Fig. 1;
Fig. 5 represents a partially sectioned view of a fourth feature of Fig. 1;
Fig. 6 represents a sectional view a fifth feature of Fig. 1;
Fig. 7 represents a front view of the feature of Fig. 6;
Fig. 8 represents a longitudinal sectional view of a second embodiment of the assembly according to the invention;
Fig. 9 represents a sectional view of a feature of Fig. 8;
Fig. 10 represents a longitudinal sectional view of a third embodiment of the assembly according to the invention;
Fig. 11 represents a sectional view of a feature of Fig. 10;
Fig. 12 represents a front view of the feature of Fig. 11;
Fig. 13 represents a sectional view of the assembly according to the invention;
Fig. 14 represents a sectional view of a feature of Fig. 8;
Fig. 15 represents a front view of the feature of Fig. 14;
Fig. 16 represents a longitudinal sectional view of a third embodiment of the assembly according to the invention;
Fig. 17 represents a sectional view of a feature of Fig. 16;
Fig. 18 represents a sectional view of a detail of Fig. 17;
Fig. 19 represents a front view of the feature of Fig. 17.

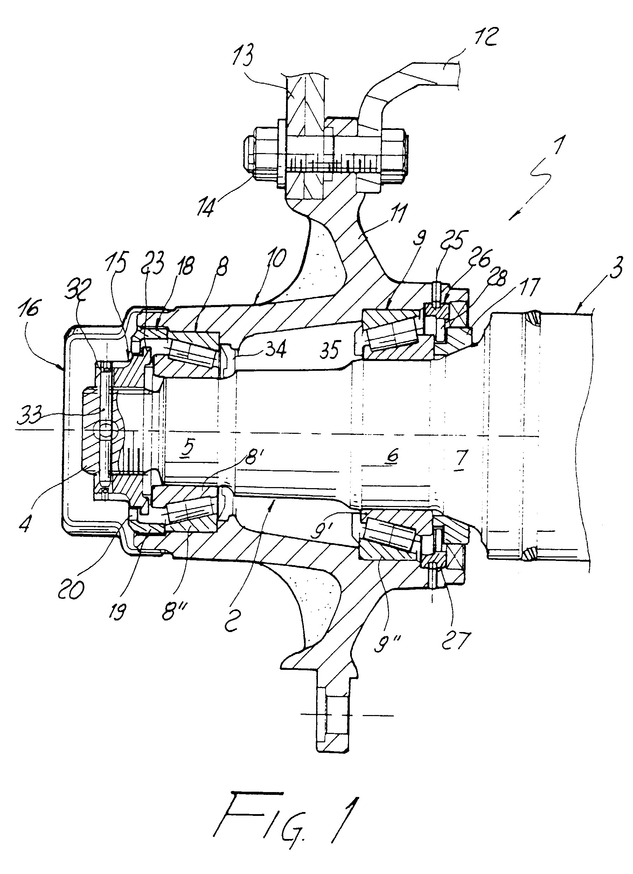

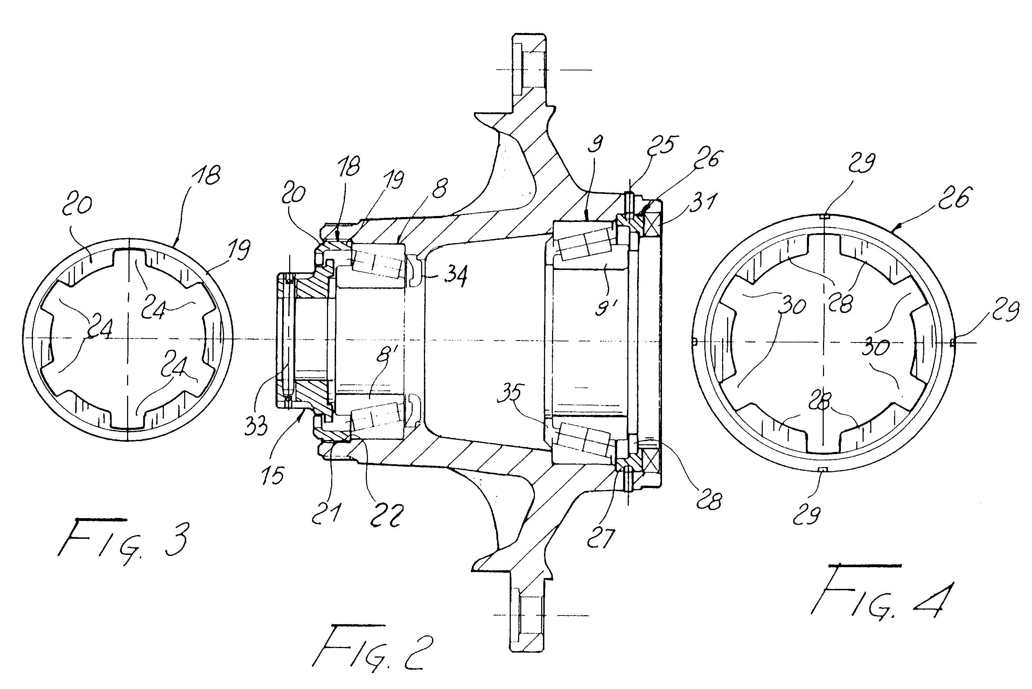

With reference to Figures 1 to 7, a wheel assembly indicated overall with the reference number 1, is mounted on an end stub axle spindle 2 welded to an axle 3, in which the said spindle has an externally threaded end 4, two cylindrical portions 5, 6 and a frustoconical shoulder 7.

The cylindrical areas 5, 6 define accurate seats for respective end bearings 8, 9, one outermost and the other innermost 9 with respect to the position of the wheel on the axle. Both bearings 8, 9 are preferably rolling type, for example taper roller or ball bearings, and have respective fixed or inner races 8', 9' and outer moving races 8", 9". Mounted on the outer races 8", 9" is an essentially tubular hub 10 having a flange 11 on opposite sides of which may be secured a brake drum 12 and wheel disc 13 using bolts 14.

Screwed onto the threaded end 4 of the spindle 2 is an axle nut 15 which axially immobilizes the inner race 8' of the bearing 8, clamping the entire assembly of the package onto the spindle 2. A hubcap 16 made from stamped steel or some other rigid material can be placed on the nut 15, secured in a removable manner to the hub by for example straightforward pressure or with a threaded coupling.

A spacer ring 17 is provided at the opposite end, resting on the frustoconical shoulder 7 of the spindle 2 and against which the assembly is clamped by screwing the nut 15 until it brings the bearings 8, 9 into the position of immobilization.

The nut 15 is axially immobilized with respect to the hub 2 by a stop member consisting of a rigid ring 18 having an outer tubular portion 19 and an inward pointing annular flange 20. The tubular portion 19 has an external thread 21 which can be screwed into a corresponding internal thread 22 of the hub 10 in order to clamp the outer race 8" of the bearing 8.

The stop nut 15 has an outer sleeve 23 which is held by the flange 20 of the ring 18 in an axial direction but permitting rotation. In this way, by unscrewing the nut 15 the latter will drag the ring 18 with it and hence also the hub 10, thereby easing the dismantling operations. By virtue of this arrangement, the nut 15 will always remain attached to the hub 10 even when the assembly is set down on the ground. In order to remove the bearing 8 from the hub it will be sufficient to unscrew the ring 18 from the hub, thereby allowing the nut to free the inner race 8' of the bearing 8.

Nevertheless, to allow inspection and greasing of the bearing 8 without removing it from the hub, the inner flange 20 of the rigid ring 18 has a series of radial recesses 24 regularly distributed around the circumferential outline of the flange and having radial heights which are greater than the diameter of the annular sleeve 23. In this way, these recesses 24 create apertures or passages through which an operator will be able to check the state of the bearing 8 or of its rollers and if necessary will be able top up the grease, thereby always guaranteeing continuous lubrication of the assembly during its entire life.

Expediently, the innermost bearing 9 is axially immobilized with respect to the hub by at least one fastening dowel 25, which is easily accessible from outside and can be removed by straightforward unscrewing with a screwdriver. Preferably, two or four fastening dowels 25 are provided, inserted into diametral holes in the hub 10. In the embodiment illustrated in Figs. 1 and 2, the fastening dowels 25 cooperate with a retaining ring 26 which acts in turn on the outer race 9" of the bearing 9.

The retaining ring 26 has an outer cylindrical portion 27 and a central flange 28 which points radially inwards. The outer cylindrical portion 27 is housed in a seat of complementary shape to that of the hub 10 and has on its outer cylindrical surface, a series of blind holes 29 aligned with the fastening dowels 25. The central flange 28 extends radially so as axially to immobilize the fixed or inner race 9' of the bearing 9, preventing it from becoming separated from the central cage of the rollers and from the outer race 9" when dismantling the assembly.

In this case also, in order to allow inspection of the bearing 9 without removing it from the hub, the central flange 28 of the retaining ring 26 has a series of radial recesses 30 regularly distributed around the outline edge with radial height greater than the outer diameter of the inner race 9' of the bearing 9.

The spacer ring 17 is separated and independent from the hub 10 so as to reduce the number of components and the weight of the assembly. Expediently, the separator ring 17 has an outer diameter which is less than the inner diameter of the hub so as to house an oil seal ring 31, inserted with slight interference into the hub, so as to be easily inspectable and replaceable from outside without having to dismantle the bearing or the retaining ring 26 in any manner whatsoever.

In order to prevent the axle nut 15 from unscrewing from the spindle 2, the said nut can have a series of front recesses 32 which can house a plug 33 inserted into a diametral through hole formed in the threaded part 4 of the spindle 2 and in turn immobilized axially with respect to the nut by a cotter pin or equivalent stop member.

Inserted on the inside of the bearing 8 is a shaped centring ring 34 whose function is to facilitate the insertion of the spindle 2 into the hub by guiding its threaded part inside the bearing 8.

Alongside this ring 34 is placed an inner oil seal ring 35 able to hold the grease inserted into the bearing 9.

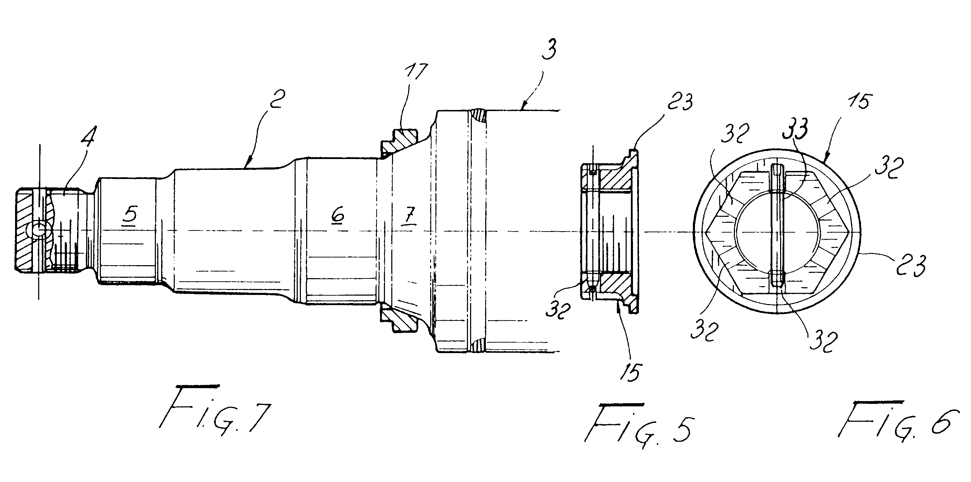

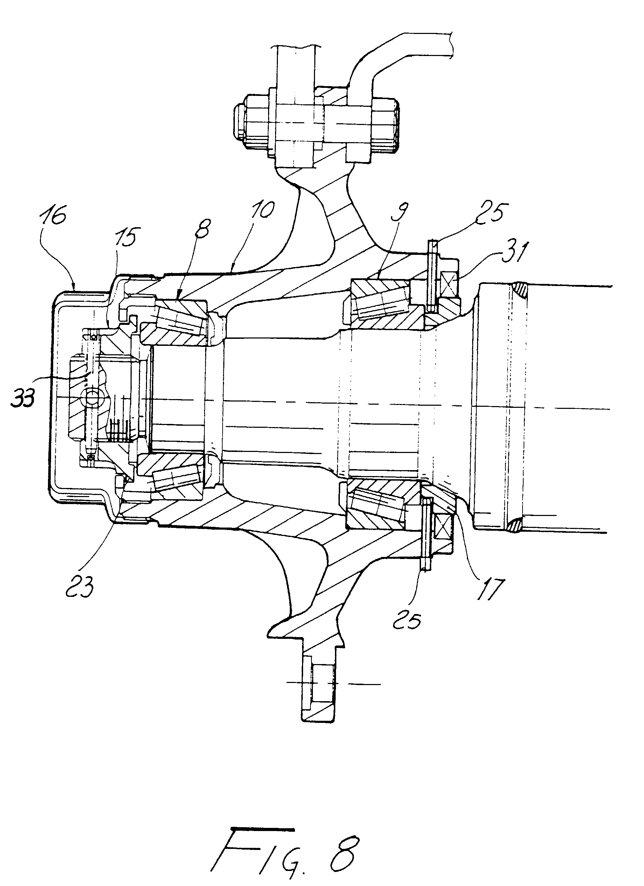

The embodiment illustrated in Figs. 8 and 9 differs from the first, illustrated in Figures 1 to 7, through the absence of the retaining ring 26 and through the fact that the fastening dowels 25, with their free end projecting into the hub, axially immobilize the inner race 9' of the bearing 9.

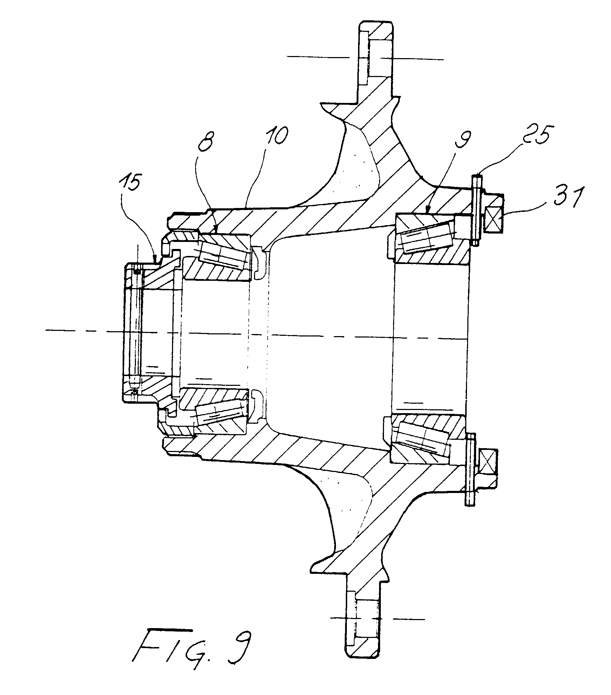

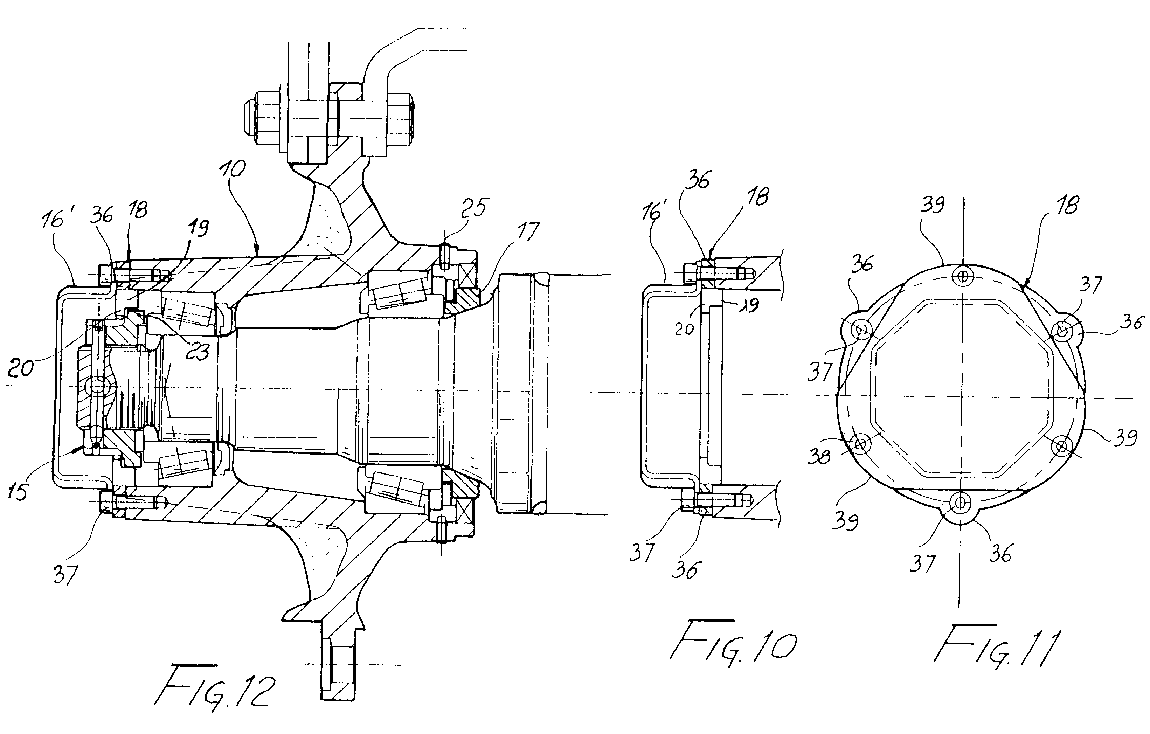

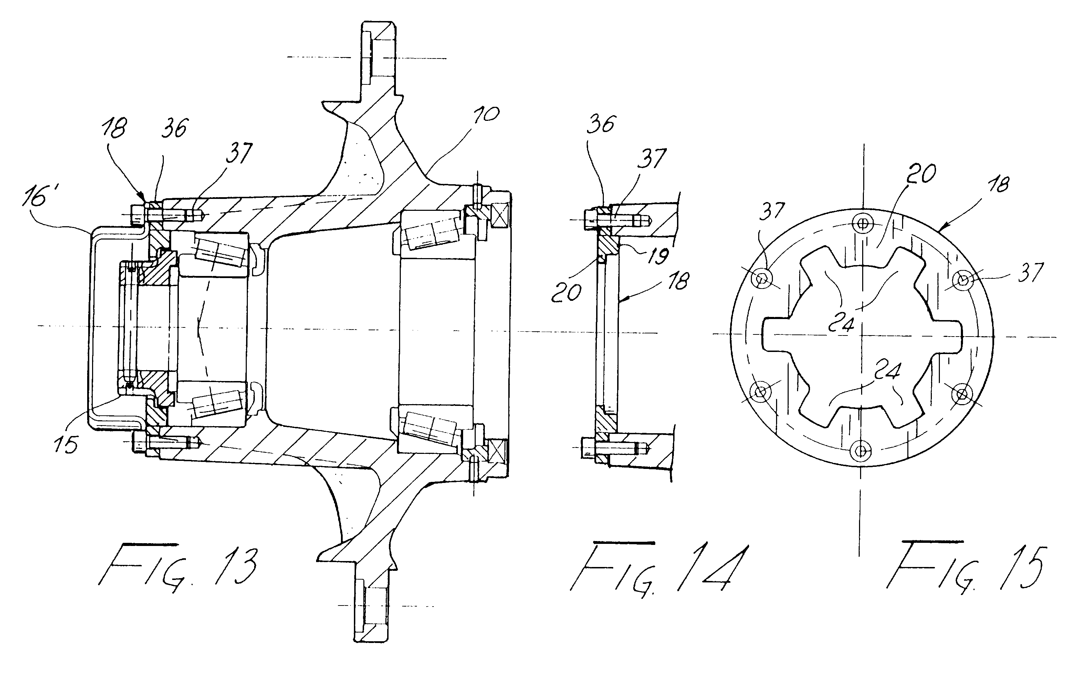

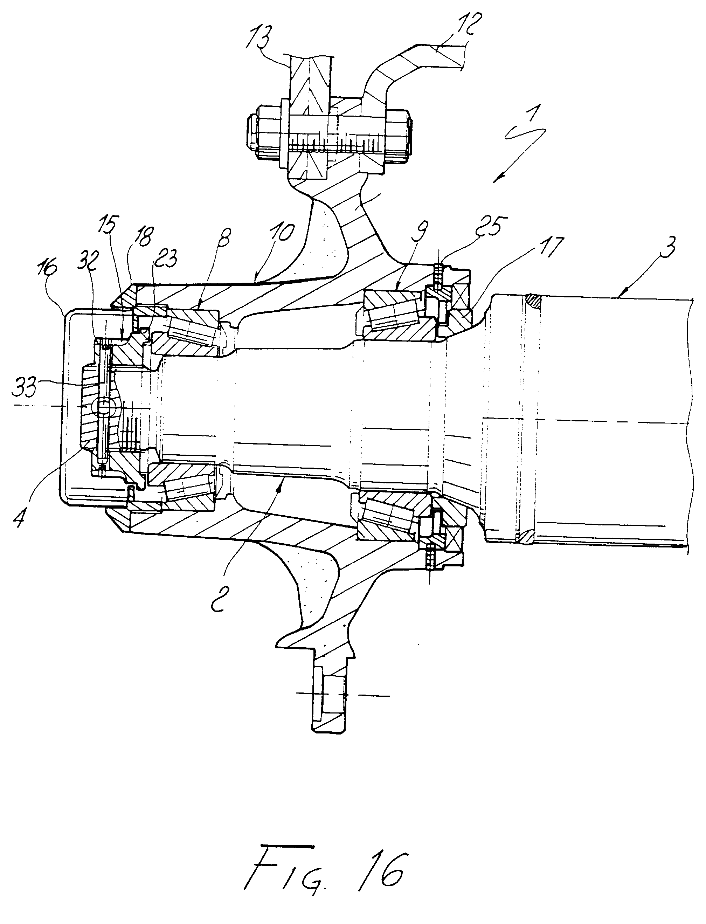

The embodiment illustrated in Figures 10 to 15 differs from the first through the fact that the rigid ring 18 has, along its outer edge, bosses 36 with through holes for bolts 37 screwed into the front edge of the hub 10. The hubcap 16, too, can have a flange 38 with through holes for bolts 39 screwed into the front edge of the hub 10.

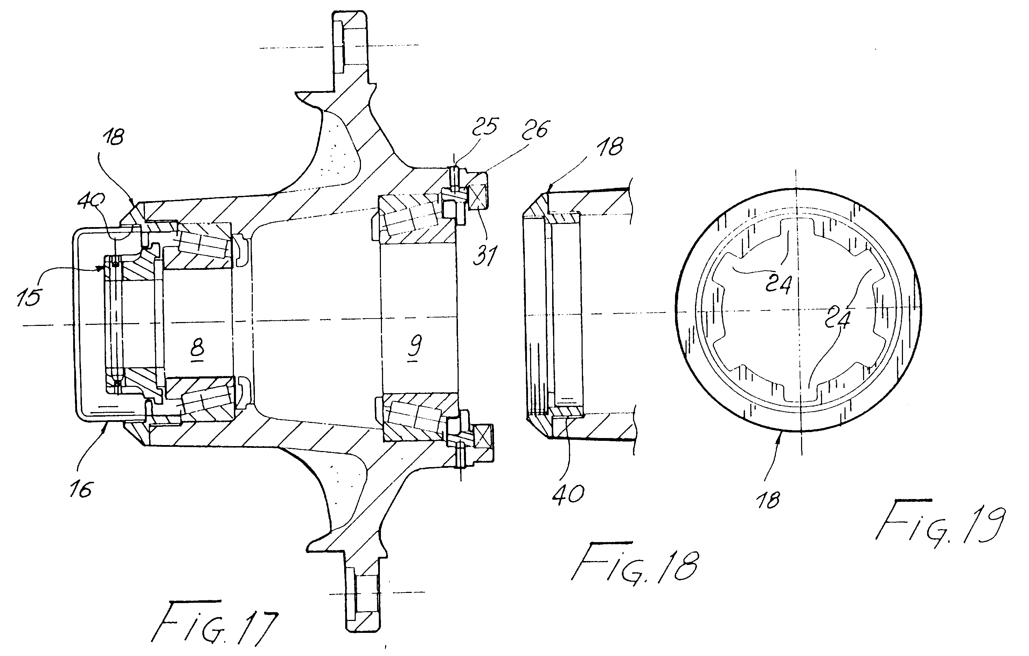

The embodiment illustrated in Figures 16 to 19 differs from the first essentially through the shape of the rigid ring 18 which is joined to the hubcap 16 by a threaded coupling 40, and is in turn screwed into the hub 10.

In all these examples of embodiments, in order to dismantle the assembly from the stub axle spindle 2, the hubcap 16 is unscrewed, and then the plug 33 is removed from the stub axle, the nut 15 is unscrewed and this, on translating leftwards in the figures, acts by means of its sleeve 27 on the inner edge 24 of the ring 18 which in turn drags the hub 10 outwards, jointly with the bearings 8, 9 and with the respective stop members. Illustrated in Figs. 29, 13, 17 is the assembly as it appears after removal from the spindle 2. It is observed that the spacer or thrust ring 17 does not belong to the assembly and is kept centred on the spindle 2 around its shoulder 7. It will be possible to carry out ordinary maintenance of the brake and of the wheel with the assembly removed from the spindle, without dismantling the bearings 8, 9 from the respective seats.

In order to carry out maintenance of the bearings, it will be possible to inspect them through the respective apertures 24, 30 in the rings 18, 26 or through the fastening dowels 25 in order to check the state of wear of the rollers and if necessary to introduce further grease using a syringe or equivalent means.

Furthermore, it will be possible to check the state of wear and of effectiveness of the oil seal ring 31 and, if necessary, to replace it.

## Claims

1. Wheel assembly for axles of industrial vehicles, comprising:
- at least one pair of rolling bearings (8, 9) mounted on an axle spindle (2);
- a hub (10) supported by the said bearings and to which is fixed a brake drum (12);
- a spacer ring (17) interposed between the innermost bearing (9) and a land (7) of the spindle (2); and
- an axle nut (15) screwed onto the external threaded end (4) of the spindle (2) in order to immobilize the outermost bearing (8) axially;
characterized in that the spacer ring (17) is separated and independent from the hub (10), the axle nut (15) is immobilized axially by a first rigid shaped ring (18) secured to the hub by a threaded coupling, the innermost bearing (9) is immobilized axially with respect to the hub (10) by at least one fastening dowel (25), and in that through apertures (24; 30) are provided at the axial ends of the hub for inspecting and lubricating the end bearings (9; 8) directly from outside without removing them from the hub.

2. Wheel assembly according to Claim 1, characterized in that the said first rigid shaped ring (18) comprises an outer tubular portion (19) and an inner radial portion (20).

3. Wheel assembly according to Claim 2, characterized in that the said inner radial portion (20) has a radial extension such as to interfere axially with an outer annular sleeve (23) of the axle nut (15).

4. Wheel assembly according to Claim 2, characterized in that the said outer tubular portion (19) has a plurality of bosses with through holes for corresponding bolts (37) screwed to the hub (10) at its front edge.

5. Wheel assembly according to Claim 2, characterized in that the said outer tubular portion (19) has an external thread (21) screwed into an internal thread (22) of the hub (10).

6. Wheel assembly according to Claim 4, characterized in that the said inner radial portion (20) has a first series of radial recesses (24) defining the said through apertures for inspecting the outermost bearing (8).

7. Wheel assembly according to Claim 6, characterized in that the said radial recesses (24) are angularly equispaced and have a maximum radial height greater than the outer diameter of the said annular sleeve (23) of the nut (15).

8. Wheel assembly according to Claim 1, characterized in that it comprises at least one pair of fastening dowels (25) inserted into corresponding threaded holes in the hub and having shaped ends interfering axially and radially with the fixed race (9') of the innermost bearing (9).

9. Wheel assembly according to Claim 1, characterized in that it comprises a second rigid shaped retaining ring (26) secured to the hub by the said fastening dowels (25).

10. Wheel assembly according to Claim 9, characterized in that the said second rigid shaped ring (26) comprises an outer cylindrical portion (27) and an inner annular flange (28) of radial breadth able to interact with the fixed race (9') of the innermost bearing (9).

11. Wheel assembly according to Claim 10, characterized in that the said outer cylindrical portion (27) has blind holes (29) for housing the inner end of the said at least one fastening dowel (25).

12. Wheel assembly according to Claim 11, characterized in that the said inner annular flange (28) of the said second rigid shaped retaining ring (26) has a second series of radial recesses (30) defining the said through apertures for the innermost bearing (9).

13. Wheel assembly according to Claim 11, characterized in that the said spacer ring (17) has a maximum diameter less than the inner diameter of the hub (10) and forms with the latter an annular seat able to house a lubrication sealing ring (31).

14. Wheel assembly according to Claim 12, characterized in that the said second series of radial recesses (30) are angularly equispaced and have a radial height greater than the maximum diameter of the said spacer ring (17) and of the said fixed race (9').

15. Wheel assembly according to Claim 1, characterized in that the said axle nut (15) has antiunscrewing means consisting of a plurality of front recesses (32) formed on the outer face of the nut (15) and intended for housing a through plug (33) which can be inserted into a diametral cavity of the threaded end (4) of the spindle (2).

16. Wheel assembly according to one or more of the preceding claims, characterized in that it comprises a hubcap (16, 16') which covers the axle nut (15), coupled to the said hub (10) or to the said first rigid shaped ring (18) by suitable threaded couplings (40).
